# NEW EUROPEAN PATENT SPECIFICATION

(11) **EP 1 902 629 B2**
(45) Date of publication and mention of the opposition decision: **17.06.2015**
(45) Mention of the grant of the patent: 25.02.2009
(21) Application number: 06019675.5
(22) Date of filing: 20.09.2006
(51) Int. Cl.: A23G 1/00, A23G 1/20

(54) **Apparatus for producing a confectionery product from multiple components**
Vorrichtung für die Herstellung einer Süßware aus einer Vielzahl von Zutaten
Dispositif pour la production d'une confiserie de multiples composants

(43) Date of publication of application: 26.03.2008
(73) Proprietor: Kraft Foods R & D, Inc., Deerfield, IL 60015 (US)
(72) Inventor: Abylov, Melis, 81669 München (DE); Hecht, Gerhard, 87600 Kaufbeuren (DE); Kijowski, Mark, 80331 München (DE); Simbuerger, Stephan, 81375 München (DE)
(74) Representative: Hoffmann Eitle

(56) References cited:
- EP-A1- 0 832 567
- EP-A1- 0 958 747
- WO-A-01/95737
- WO-A1-00/032057
- US-A- 3 830 407
- US-A- 4 191 786
- US-A- 4 664 927
- US-A- 5 232 734
- US-A- 5 468 509

## Description

### Technical Field

The present invention relates to a for an apparatus for producing a confectionery product, preferably chocolate, according to the preamble of claim 1.

### Background of the Invention and Prior Art

For producing confectionery products, for example chocolate, typically confectionery mass is deposited into mould cavities in order to produce for example a chocolate slab, tablet, bar, slice, chunk, etc.

A large variety of machines for depositing of confectionery products, chocolate articles in particular, is known. A number of such machines is engineered to mix two or more confectionery masses normally different in colour, basic components, and consistency.

EP 1 462 009 A1 teaches an apparatus with a depositor having a worm-like or screw-shaped insert. After supplying two different masses for example milk chocolate mass and white chocolate mass to the depositor, the masses are more or less mixed in order to reproduce the marbled look effect in chocolate mass prior to depositing.

Blending of conventional chocolate or compound chocolate mass with a water carrier imparts a degree of heat stability to the blend. However, upon addition of the water carrier the viscosity of the blend increases rapidly and becomes practically impossible to handle or mold and further results in a coarse and sandy sensation in the mouth. In US 6,165,540 a process for manufacturing chocolate compositions containing water is described where molten chocolate mass at 45 °C is carefully incorporated in small quantities into water-in-oil emulsion using slight to moderate stirring. Further, the patent implies that a water-in-oil emulsion can be incorporated continuously in a mass of chocolate or the like by means of one or more static mixers arranged in series.

From US-4,664,927 a chocolate composition is known, which comprises polyols as a water carrier mixed into the chocolate. Said mixture is processed using very short holding times.

### Summary of the Invention

The basic problem addressed by the present invention is the production of a molded confectionery product, preferably chocolate, composed of a fat-containing confectionery mass and a water carrier, where the above components are blended uniformly and the blended mass is molded immediately upon blending.

This problem is solved by an apparatus with the features of claim 1. Preferred embodiments are described in the respective subclaims.

The above object of the invention is essentially solved by minimizing the time span required for blending and molding, hence molding is completed prior to viscosity increase of the blend. The invention provides an apparatus producing a molded confectionery product, by the steps of transferring a fat-containing confectionery mass and a water carrier into mixing nozzle with a static mixer inside, blending the fat-containing confectionery mass and the water carrier by the static mixer to a substantially homogeneous blend, and depositing the blend in at least one mould or onto a conveyor belt, whereby these steps are performed within 60 seconds or less, preferably within 35 seconds or less.

Thus, the time span for mixing and depositing of the chocolate blend is minimized, therefore a viscosity increase of the blend is substantially avoided, further handling of the blend is easier and the quality of the finished product is raised. Transfer of the components into the mixing nozzle takes as short time as possible, specifically 1 second or less. The time span needed for the mixing process depends on the kind of the static mixer, the flow rate inside the mixing nozzle, chemical-physical properties of the masses and the blend, etc. and measures between 11 and 30 seconds. Depositing of the blended mass is completed in approximately 2 seconds. All together 35 seconds or less, more preferably 20 seconds or less, or in particular around 15 seconds, are needed for the entire process.

A fat-containing confectionery mass is for example a chocolate mass or the like, while a water carrier is for instance a water-containing emulsion or the like. Transfer of the fat-containing confectionery mass and the water carrier into the mixing nozzles can be done in continuous or discontinuous way whereby the components are gauged prior to the transfer. The mixing nozzle is preferably a tube, and is built into a piston depositor which enables gauging of the components from volume with further injecting into mixing nozzle in order to overcome the counter-pressure created by static mixer inside the mixing nozzle.

The above mentioned method enables to effectively mix the components and deposit a blend with water content of more than 1 percent, preferably more than 3 percent. The water content of the blend plays a key role in making it more heat-resistant.

In addition, the fat-containing confectionery mass and the water carrier might be transferred in isolation from each other into two tubes of the mixing nozzle with the mixer inside, wherein one tube is encircled by the other one, preferably coaxially. Thus, when injecting the two components into the mixing nozzle, the components are prevented from mixing beforehand. Further, mounting the mixer into the mixing nozzle reduces the size of the entire apparatus and provides the advantage that after mixing the mass can be deposited immediately.

Further, the fat-containing confectionery mass and the water carrier can be blended by a static mixer having at least one screw-shaped mixing element and / or at least one cross-flow mixing element. The screw-shaped mixing element, which has interruptions between the screw-sections, has the advantage that it provides little shear stress, while the cross-flow mixing element, which is an element with an irregular lattice-like structure of flow barriers, allows better mixing per given length. Screw-shaped mixing elements are also known as helical mixing elements, worms, helices, etc. The cross-flow mixing elements are referred to by different identifications at different manufacturers, e.g. "Sulzer" SMX, "Fluitec" CSE-X, "Komax" Ultra Mixer, etc.

The apparatus for producing a shaped confectionery product comprises channels for transferring of a fat-containing confectionery mass and a water carrier, a mixer for blending these two components to a substantially homogeneous blended mass, and a nozzle for depositing the blended mass, so that the apparatus can process the fat-containing confectionery mass and the water carrier within 35 seconds or less, measured from the time of transferring the masses to the time of depositing the blended mass into the at least one mould or on top of a conveyor belt or into any receptacle for enrobing. Thus, the processing time of the blended mass is minimized and its handling is simplified.

Further, the apparatus can comprise at least one nozzle plate, in which the channels are formed, and / or to which at least one mixing nozzle is mounted. If multiple nozzles are mounted, multiple moulds can be filled and / or one mould can be filled in shorter time and, therefore, the number of produced pieces per hour can be increased.

In addition, the apparatus can comprise at least one check valve in at least one transfer channel. Then, the fat-containing confectionery mass and the water carrier are prevented from flowing back despite the counter-pressure inside the mixing nozzle and, thus, no undesired mixing in the transfer channel and / or no leak of mass from the whole apparatus takes place.

### Brief Description of the Drawings

Fig. 1 shows a sectional view of a part of the apparatus with a nozzle plate, one mixing nozzle and one mould;
Fig. 2A shows a mixing nozzle and a cross-flow mixing element;
Fig. 2B shows a mixing nozzle and a screw-shaped mixing element;
Fig. 3 shows a sectional view of a part of the apparatus with a nozzle plate, one mixing nozzle, one mould and a check valve in the inside tube.

### Detailed Description of the preferred Embodiments

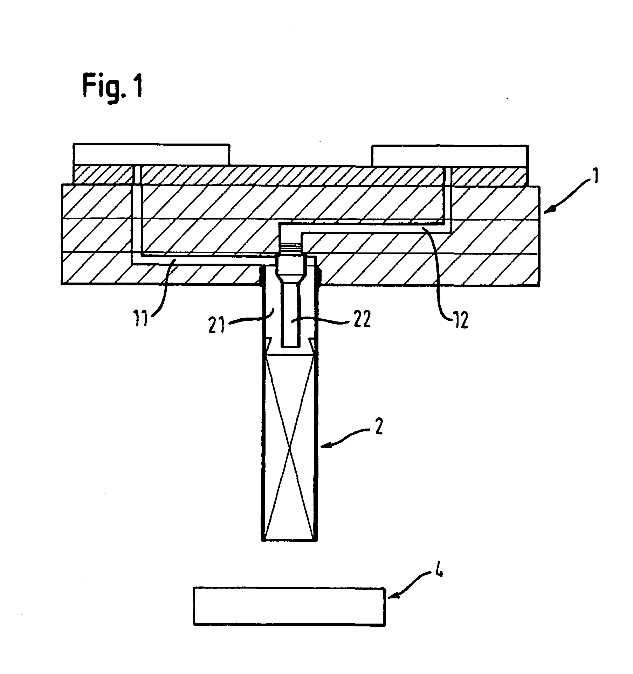

Fig. 1 shows a part of an apparatus for producing a molded confectionery product, comprising a nozzle plate 1 with transfer channels 11, 12 and a mixing nozzle 2 with two coaxial tubes 21, 22. Below the depositor, a mould 4 is depicted.

A fat-containing confectionery mass, for example a chocolate mass or the like, is transferred via the transfer channel 11, while a water carrier, for example a water-containing emulsion or the like, is transferred via the channel 12. The channels 11, 12 can be formed as separate lines or tubes inside a hollow plate or as bores in a solid plate. Transfer channel 11 is connected to outside tube 21, while transfer channel 12 is connected to inside tube 22. In the embodiment shown, outside tube 21 encircles inside tube 22 coaxially. Thus, the fat-containing confectionery mass and the water carrier can be injected into the mixing nozzle 2 in isolation from each other. The upper part of the mixing nozzle 2 comprises the tubes 21, 22, while static mixers 23, 24 is mounted or integrated into the lower part of the mixing nozzle 2.

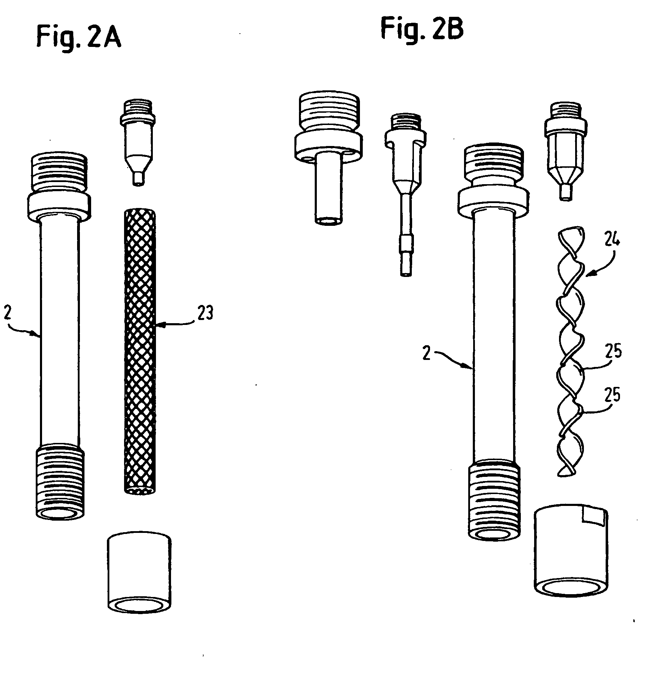

In Fig. 2A, a mixing nozzle 2 is shown wherein the cross-flow mixing element 23 or the screw-shaped mixing element 24 is inserted. Screw-shaped mixing element is shown in Fig. 2B. The cross-flow mixing element 23 is a cylinder-shaped lattice-like structure of flow-barriers with better mixing per given length compared to the screw-shaped mixing element. The screw-shaped mixing element 24 has several interruptions forming various screw-sections 25 with reduced shearing compared to the cross-flow mixing element.

After injecting the fat-containing confectionery mass and the water carrier from the respective tubes 21, 22, components pressed towards the mixing nozzle and get blended by at least one screw-shaped or worm-like mixing element 24 and / or by at least one cross-flow mixing element 23 or by any combination from screw-shaped and cross-flow mixing elements. After mixing the two components to a homogeneous mass, the blended mass can be immediately deposited into moulds 4 or into individual mould cavities of a moulding form or on top of a conveyor belt with or without cavities.

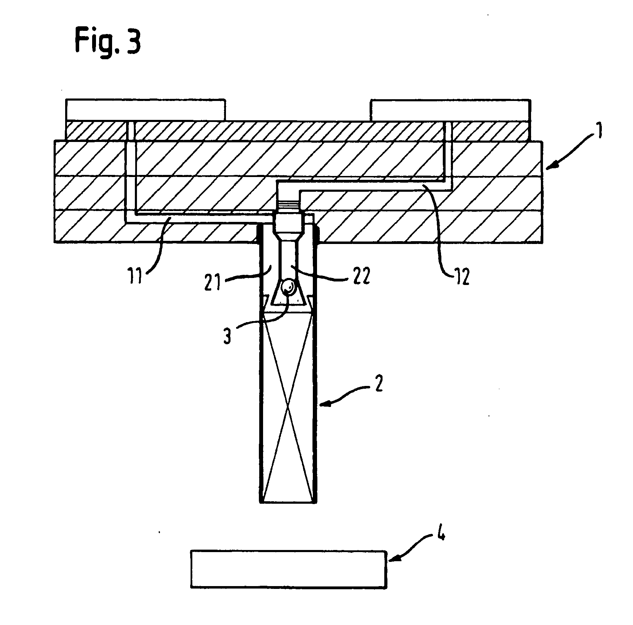

Fig. 3 shows a further embodiment of a part of an apparatus for producing a molded confectionery product, where the aforementioned components are designated by the same reference numbers. In Fig. 3 a check valve 3 mounted in tube 22 is shown. Certainly, it also might be possible to mount a check valve 3 in channel 21 and / or in at least one of the channels 11, 12. In this embodiment, outlet of the tube 22 is shaped as a truncated cone, while the tube also can have a normal cylindrical shape, as shown in Fig. 1.

## Claims

1. An apparatus for producing a molded confectionery product, comprising
a) channels (11, 12) for transferring a fat-containing confectionery mass and a water carrier from hoppers to mixing nozzles,
b) a static mixer (23, 24) for blending the fat-containing confectionery mass and the water carrier to a substantially homogeneous blended mass,
c) at least one mixing nozzle (2) for depositing the blended mass,
**characterized in that** the static mixer (23, 24) is integrated into the mixing nozzle (2) and the apparatus is adapted to process the components within 60 seconds or less, measured from the time of transferring the fat-containing confectionery mass and the water carrier to the time of depositing the blended mass into at least one mold (4) or onto a conveyor belt or into a receptacle for enrobing.

2. The apparatus for producing a molded confectionery product according to claim 1, further comprising two tubes (21, 22), wherein one tube (22) is encircled by the other one (21), preferable coaxially, so that the fat-containing confectionery mass and the water carrier can be transferred in isolation from each other into the mixing nozzle (2).

3. The apparatus for producing a molded confectionery product according to one of claim 1 or claim 2, **characterized in that** the mixer is static and has at least one screw-shaped mixing element (24) and / or at least one cross-flow mixing element (23).

4. An apparatus for producing a molded confectionery product according to one of claims 1 to 3, further comprising at least one nozzle plate (1), in which the transfer channels (11, 12) are formed, and / or to which at least one mixing nozzle (2) is mounted.

5. An apparatus for producing a molded confectionery product according to one of claims 1 to 4, further comprising at least one check valve (3) in at least one channel (11, 12) and / or in at least one tube (21, 22).

## Patentansprüche

1. Vorrichtung zur Herstellung eines geformten
Süßwarenprodukts, umfassend:
a) Kanäle (11, 12) zum Überführen einer fetthaltigen Süßwarenmasse und einer Wasserträgersubstanz von Trichtern zu Mischdüsen,
b) einen statischen Mischer (23, 24) zum Durchmischen der fetthaltigen Süßwarenmasse und der Wasserträgersubstanz zu einer im Wesentlichen homogenen durchmischten Masse,
c) zumindest eine Mischdüse (2) zum Ablegen der durchmischten Masse,
**dadurch gekennzeichnet, dass**
dass der statische Mischer (23, 24) in die Mischdüse (2) integriert ist und die Vorrichtung dazu ausgebildet ist, die Komponenten binnen 60 Sekunden oder weniger, gemessen von dem Zeitpunkt, zu dem die fetthaltigen Süßwarenmasse und die Wasserträgersubstanz überführt werden, zu dem Zeitpunkt, zu dem die durchmischte Masse in mindestens einer Form (4) oder auf einem Förderband oder in einer Umhüllfassung abgelegt wird, zu verarbeiten.

2. Vorrichtung zur Herstellung eines geformten Süßwarenprodukts nach Anspruch 1, ferner aufweisend zwei Rohre (21, 22), wobei ein Rohr (22) von dem anderen (21), bevorzugt koaxial, umschlossen wird, so dass die fetthaltige Süßwarenmasse und die Wasserträgersubstanz getrennt voneinander in die Mischdüse (2) überführt werden können.

3. Vorrichtung zur Herstellung eines geformten Süßwarenprodukts nach Anspruch 1 oder Anspruch 2,
**dadurch gekennzeichnet, dass**
der Mischer stationär ist und mindestens ein schraubenförmiges Mischelement (24) und/oder mindestens ein Querstrommischelement (23) aufweist.

4. Vorrichtung zur Herstellung eines geformten Süßwarenprodukts nach einem der Ansprüche 1 bis 3, ferner aufweisend mindestens eine Düsenplatte (1), in welcher die Überführungskanäle (11, 12) ausgebildet sind, und/oder an welcher mindestens ein Mischdüse (2) ausgebildet ist.

5. Vorrichtung zur Herstellung eines geformten Süßwarenprodukts nach einem der Ansprüche 1 bis 4, ferner aufweisend mindestens ein Rückschlagventil (3) in mindestens einem Kanal (11, 12) und/oder in mindestens einem Rohr (21, 22).

## Revendications

1. Appareil pour la production d'un produit de confiserie moulé, comportant
a) des canaux (11, 12) pour transférer une masse de confiserie contenant de la matière grasse et de l'eau servant de véhicule depuis des magasins jusqu'à des buses de mélange,
b) un mélangeur statique (23, 24) destiné à mélanger la masse de confiserie contenant de la matière grasse et l'eau servant de véhicule en une masse mélangée de façon sensiblement homogène,
c) au moins une buse de mélange (2) destinée à déposer la masse mélangée,
**caractérisé en ce que** le mélangeur statique (23, 24) est intégré à la buse de mélange (2), et l'appareil est conçu pour traiter les constituants en 60 secondes ou moins, mesurées à partir du moment de transfert de la masse de confiserie contenant de la matière grasse et de l'eau servant de véhicule jusqu'au moment du dépôt de la masse mélangée dans au moins un moule (4) ou sur une bande transporteuse ou dans un réceptacle pour un enrobage.

2. Appareil pour la production d'un produit de confiserie moulé selon la revendication 1, comportant en outre deux tubes (21, 22), dans lequel un tube (22) est entouré par l'autre tube (21), de préférence coaxialement, afin que la masse de confiserie contenant de la matière grasse et l'eau servant de véhicule puissent être transférés en étant isolés l'un de l'autre jusque dans la buse de mélange (2).

3. Appareil pour la production d'un produit de confiserie moulé selon l'une des revendications 1 et 2, **caractérisé en ce que** le mélangeur est statique et comporte au moins un élément de mélange (24) en forme de vis et/ou au moins un élément de mélange (24) à écoulement transversal (23).

4. Appareil pour la production d'un produit de confiserie moulé selon l'une des revendications 1 à 3, comportant en outre au moins une plaque (1) à buses, dans laquelle les canaux de transfert (11, 12) sont formés, et/ou sur laquelle au moins une buse de mélange (2) est montée.

5. Appareil pour la production d'un produit de confiserie moulé selon l'une des revendications 1 à 4, comportant en outre au moins un clapet de retenue (13) dans au moins un canal (11, 12) et/ou dans au moins un tube (21, 22).
